# EUROPEAN PATENT APPLICATION

(11) **EP 4 772 323 A1**
(43) Date of publication of application: **08.07.2026**
(21) Application number: 24859626.4
(22) Date of filing: 23.08.2024
(51) Int. Cl.: B29C 43/24, C08K 3/013, C08K 5/098, C08K 5/134, C08L 23/06

(54) **POLYETHYLENE RESIN COMPOSITION AND FILM OF SAME**

(30) Priority: 31.08.2023 JP 2023140603
(71) Applicant: Riken Technos Corporation, Tokyo 101-8336 (JP)
(72) Inventor: SAYAMA, Shomi, Tokyo 101-8336 (JP); OKADA, Toshihiko, Tokyo 101-8336 (JP); TAKAHASHI, Tomohiro, Tokyo 101-8336 (JP)
(74) Representative: J A Kemp LLP
(86) International application number: PCT/JP2024/029933
(87) International publication number: WO 2025/047593

(57) **Abstract**

The present invention provides a polyethylene resin composition for the film formation by calender rolling, the polyethylene resin composition including (A) a polyethylene, (B) an antioxidant, (C) one or more substances that are selected from the group consisting of a fatty acid zinc and a fatty acid magnesium, and (D) an inorganic filler, wherein the (A) polyethylene satisfies:(1) the melt mass flow rate as determined in accordance with JIS K7210 (1999) under the conditions of a temperature of 190°C and a load of 21.18 N is 3.0 g/10 minutes or less; and (2) the density as determined by a water displacement method in accordance with JIS K7112 (1999) is 930 kg/m³ or more. It is preferable that the component (C) contains a zinc salt of a saturated higher fatty acid having 16 to 20 carbon atoms and a magnesium salt of a saturated higher fatty acid having 16 to 20 carbon atoms. It is preferable that the (A) polyethylene contains a biomass-derived polyethylene. It is preferable that the (D) inorganic filler contains calcium carbonate.

## Description

### TECHNICAL FIELD

The present invention relates to a polyethylene resin composition and a film thereof. More specifically, the present invention relates to a polyethylene resin composition suitable for film formation by calender rolling, and a film formed from the polyethylene resin composition using an apparatus for film formation by calender rolling.

### BACKGROUND ART

Conventionally, as household electric appliances such as refrigerators, washing machines, air conditioners, mobile phones and personal computers; furniture such as decorating shelves, storage chest of drawers, dish cupboards and desks; or building members such as floors, walls and bathrooms, ornamental decorated products obtained by laminating a decorative sheet on a surface of a substrate formed of a wood-based material such as wood, plywood, laminated wood, particle board and hard board; a substrate formed of a resin-based material such as polystyrene, acrylonitrile-butadiene-styrene copolymer resin (ABS resin), polycarbonate and polyester; or a substrate formed of a metallic material such as iron and aluminum have been used. In addition, conventionally, a decorative sheet (so-called wallpaper) has been applied to a surface of a wall of a building made of a wood-based material such as wood, plywood, laminated wood, particle board, and hard board; a metallic material such as iron and aluminum; and an inorganic material such as gypsum for decoration. As a film substrate of such a decorative sheet, a film of a polyethylene resin composition has been frequently used. This is because the polyethylene resin composition can have good inclusions of an inorganic filler such as an inorganic pigment and is also excellent in economic efficiency. Moreover, in order to meet various design requirements of decorative sheets, film substrates having various colors have been also required. Therefore, as a film forming method, use of an apparatus for film formation by calender rolling has been generally desired from the viewpoint of efficiently producing various kinds of film substrates. However, when a film is formed using an apparatus for film formation by calender rolling, there is a disadvantage that vertical streaks are likely to occur in the polyethylene resin composition film. Moreover, an inorganic filler such as an inorganic pigment is often blended in the film substrate of the decorative sheet, and the problem of the vertical streaks occurrence becomes remarkable when the inorganic filler is blended in the polyethylene resin composition.

In recent years, from the viewpoint of reducing the environmental load, it has been proposed to use biomass-derived polyethylene instead of petroleum-derived polyethylene. However, it has been found that when biomass-derived polyethylene is used instead of petroleum-derived polyethylene, there is a disadvantage that the variation in thickness of a film formed using an apparatus for film formation by calender rolling is large.

### CITATION LIST

### PATENT LITERATURE

PATENT LITERATURE 1: JPS46-041463B
PATENT LITERATURE 2: JPH06-080836A
PATENT LITERATURE 3: JPH07-026077A
PATENT LITERATURE 4: JPH09-227730A
PATENT LITERATURE 5: JPH11-310669A
PATENT LITERATURE 6: JP2001-151954A
PATENT LITERATURE 7: JP2015-203035A
PATENT LITERATURE 8: JP2023-081823A

### SUMMARY OF INVENTION

### TECHNICAL PROBLEM

An object of the present invention is to provide a polyethylene resin composition suitable for film formation by calender rolling, and a film formed from the polyethylene resin composition using an apparatus for film formation by calender rolling.

Here, the fact that the polyethylene resin composition is suitable for film formation by calender rolling means that at least a significant deterioration in the appearance state of the surface of a film product due to calender rolling can be suppressed (preferably, a deterioration in the appearance state of the surface of a film product can be sufficiently suppressed).

In another preferred embodiment, the fact that the polyethylene resin composition is suitable for film formation by calender rolling means that particularly when biomass-derived polyethylene is used instead of petroleum-derived polyethylene, a significant deterioration in the appearance state of a film product due to calender rolling can be suppressed, and an occurrence of large thickness unevenness can be suppressed.

### SOLUTION TO PROBLEM

As a result of intensive studies, the present inventor has found that the above object can be achieved by a specific resin composition.

That is, aspects of the present invention are as follows.
[1].
   A polyethylene resin composition for film formation by calender rolling, comprising:
   (A) 100 parts by mass of a polyethylene;
   (B) 0.01 to 5 parts by mass of an antioxidant;
   (C) 0.1 to 5 parts by mass of one or more selected from the group consisting of a fatty acid zinc salt and a fatty acid magnesium salt, and
   (D) 10 to 150 parts by mass of an inorganic filler,
   wherein the (A) polyethylene has:
   (1) a melt mass flow rate of 3.0 g/10 minutes or less, as measured under conditions of a temperature of 190°C and a load of 21.18 N in accordance with JIS K7210: 1999; and
   (2) a density of 930 kg/m³ or more, as measured by a water displacement method in accordance with JIS K7112: 1999.
[2].
   The polyethylene resin composition for film formation by calender rolling according to the item [1], wherein the (C) one or more selected from the group consisting of a fatty acid zinc salt and a fatty acid magnesium salt contain a zinc salt of a saturated higher fatty acid having 16 to 20 carbon atoms and a magnesium salt of a saturated higher fatty acid having 16 to 20 carbon atoms.
[3].
   The polyethylene resin composition for film formation by calender rolling according to the item [1] or [2], further comprising 0.01 to 10 parts by mass of (E) an acrylic processing aid.
[4].
   The polyethylene resin composition for film formation by calender rolling according to any one of the items [1] to [3], wherein the (A) polyethylene contains a biomass-derived polyethylene.
[5].
   The polyethylene resin composition for film formation by calender rolling according to any one of the items [1] to [4], wherein the (D) inorganic filler contains calcium carbonate, and an amount of the calcium carbonate is 10 parts by mass or more with respect to 100 parts by mass of the (A) polyethylene.
[6].
   The polyethylene resin composition for film formation by calender rolling according to the item [5], wherein the calcium carbonate being the (D) inorganic filler has a specific surface area of 1.4 to 3.5 m²/g as measured by an air permeation method.
[7].
   The polyethylene resin composition for film formation by calender rolling according to the item [6], wherein the (A) polyethylene contains a biomass-derived polyethylene.
[8].
   The polyethylene resin composition for film formation by calender rolling according to any one of the items [1] to [7], wherein
   the (A) polyethylene is:
   a mixture composed of 90 to 20 mass% of (a1) a polyethylene having a relatively high melt mass flow rate and 10 to 80 mass% of (a2) a polyethylene having a relatively low melt mass flow rate; and
   a ratio (MFR-a1/MFR-a2) of the melt mass flow rate (MFR-a1) of the (a1) polyethylene to the melt mass flow rate (MFR-a2) of the (a2) polyethylene is more than 1.0 and 20 or less; and
   the melt mass flow rates of the (a1) polyethylene and the (a2) polyethylene are measured in accordance with JIS K7210: 1999 under conditions of a temperature of 190°C and a load of 21.18 N.
[9].
   The polyethylene resin composition for film formation by calender rolling according to any one of the items [1] to [8], wherein the polyethylene resin composition does not contain cellulose.
[10].
   A film formed by calender rolling, the film being made from the polyethylene resin composition for film formation by calender rolling according to any one of the items [1] to [9].
[11].
   A decorative sheet comprising the film formed by calender rolling according to the item [10].

### ADVANTAGEOUS EFFECTS OF INVENTION

According to the polyethylene resin composition of the present invention, the occurrence of vertical streaks when a film is formed using an apparatus for film formation by calender rolling can be suppressed. According to a preferred polyethylene resin composition of the present invention, even when a large amount of inorganic filler is blended, the occurrence of vertical streaks when a film is formed using an apparatus for film formation by calender rolling can be suppressed. In a preferred polyethylene resin composition according to another embodiment of the present invention, even when biomass-derived polyethylene is used instead of petroleum-derived polyethylene, the variation in thickness when a film is formed using an apparatus for film formation by calender rolling can be made smaller. Therefore, a film formed by using the polyethylene resin composition of the present invention using an apparatus for film formation by calender rolling can be suitably used as a film substrate of a decorative sheet.

### BRIEF DESCRIPTION OF DRAWINGS

Fig. 1 is a photograph showing a surface appearance of a film 1 of Example 16.
Fig. 2 is a conceptual diagram showing an embodiment of a decorative sheet of the present invention.

### DESCRIPTION OF EMBODIMENTS

In the present specification, the term "resin" is used as a term including a resin mixture containing two or more kinds of resins and a resin composition containing a component other than a resin.

In the present specification, the term "film" is used exchangeably or interchangeably with "sheet". In the present specification, the terms "film" and "sheet" are used for those that can be industrially wound into a roll. The term "plate" is used for those that cannot be industrially wound into a roll. In addition, in the present specification, lamination of one layer and another layer in this order includes both that the layers are directly laminated and that the layers are laminated with one or more additional layers such as an anchor coat interposed therebetween.

In the present specification, the term "or more" for a numerical range is used to mean a certain numerical value, or more than the certain numerical value. For example, 20% or more means 20%, or more than 20%. The term "or less" for a numerical range is used to mean a certain numerical value, or less than the certain numerical value. For example, 20% or less means 20%, or less than 20%. Further, the term "to" (or "-") for a numerical range is used to mean a certain numerical value, more than the certain numerical value and less than other certain numerical value, or the other certain numerical value. Here, the other certain numerical value is a numerical value larger than the former certain numerical value. For example, 10% to 90% means 10%, more than 10% and less than 90%, or 90%. Furthermore, the upper limit and the lower limit of a numerical range can be arbitrarily combined, and arbitrarily combined embodiments can be read. For example, from the description " ... is usually 10% or more, preferably 20% or more, whereas ... is usually 40% or less, preferably 30% or less." or " ... is usually 10 to 40%, preferably 20 to 30%." for a numerical range of a certain characteristic, it can be read that the numerical range of the certain characteristic is 10 to 40%, 20 to 30%, 10 to 30%, or 20 to 40% in one of embodiments.

Except for examples, or unless otherwise specified, all numerical values used in the present specification and claims are to be understood as modified by the term "about". Without intending to limit the application of the doctrine of equivalents to claims, each numerical value should be interpreted in light of significant figures and by applying ordinary rounding techniques.

In the present specification, terms specifying shapes or geometric conditions, for example, terms such as parallel, orthogonal, and vertical include not only states exactly meant by these terms, but also substantially the same states.

In the present specification, when it is expressed as "contains a certain substance", it can be read that, in one embodiment, it contains a certain substance, consists of a certain substance, or consists only of a certain substance. For example, from the description of "composition A contains substance a1 and substance a2", it can be read that, in one embodiment, composition A contains substance a1 and substance a2, composition A consists of substance a1 and substance a2, or composition A consists only of substance a1 and substance a2.

### 1. Resin composition

The polyethylene resin composition of the present invention contains (A) a polyethylene, (B) an antioxidant, (C) one or more selected from the group consisting of a fatty acid zinc salt and a fatty acid magnesium salt (hereinafter sometimes referred to as "fatty acid zinc salt, etc."), and (D) an inorganic filler. In one of preferred embodiments, the polyethylene resin composition of the present invention further contains (E) an acrylic processing aid. In the polyethylene resin composition of the present invention according to another preferred embodiment, the (A) polyethylene contains a biomass-derived polyethylene. Hereinafter, each component will be described below.

### (A) Polyethylene

The polyethylene resin composition of the present invention contains (A) a polyethylene. The (A) polyethylene is a polymer (including a copolymer) mainly containing a structural unit derived from ethylene. Here, the phrase "mainly containing" means that a structural unit derived from ethylene is contained in the (A) polyethylene in an amount that can satisfy the range of the characteristic property (2) density described later.

Examples of the (A) polyethylene include an ethylene homopolymer and a copolymer of ethylene and a small amount of α-olefin. Here, the "small amount" means that the copolymerization amount of the α-olefin is small enough to satisfy the range of the characteristic property (2) density described later. Non-limiting examples of the α-olefin include propylene, 1-butene, 1-hexene, 1-octene, 4-methyl-1-pentene, 2-methyl-1-propene, 2-methyl-1-butene, 3-methyl-1-butene, 2-ethyl-1-butene, 2,3-dimethyl-1-butene, 3,3-dimethyl-1-butene, 2-ethyl-3-methyl-1-butene, 2,3,3-trimethyl-1-butene, 1-pentene, 2-methyl-1-pentene, 3-methyl-1-pentene, 2-ethyl-1-pentene, 3-ethyl-1-pentene, 4-ethyl-1-pentene, 2,4-dimethyl-1-pentene, 3,3-dimethyl-1-pentene, 4,4-dimethyl-1-pentene, 2,4,4-trimethyl-1-pentene, 2-propyl-1-pentene, 2-methyl-1-hexene, 3-methyl-1-hexene, 4-methyl-1-hexene, 5-methyl-1-hexene, 2-ethyl-1-hexene, 3-ethyl-1-hexene, 4-ethyl-1-hexene, 2,5-dimethyl-1-hexene, 3,3-dimethyl-1-hexene, 4,4-dimethyl-1-hexene, 4,5-dimethyl-1-hexene, 1-heptene, 2-propyl-1-heptene, 3-propyl-1-heptene, 5-ethyl-2-methyl-1-heptene, 1-nonene, 1-decene, 1-undecene, and 1-dodecene. As the α-olefin, one or more kinds of these can be used.

The melt mass flow rate as measured in accordance with JIS K7210: 1999 under conditions of a temperature of 190°C and a load of 21.18 N (1) of the (A) polyethylene is usually 3.0 g/10 minutes or less from the viewpoint of suppressing the occurrence of vertical streaks of a film product of the polyethylene resin composition and from the viewpoint of achieving both incorporation of a large amount of inorganic filler and the mechanical properties of the film. The characteristic property (1) melt mass flow rate of the (A) polyethylene may be preferably 2.0 g/10 minutes or less, more preferably 1.2 g/10 minutes or less, still more preferably 0.90 g/10 minutes or less, and most preferably 0.60 g/10 minutes or less. On the other hand, the characteristic property (1) melt mass flow rate of the (A) polyethylene may be preferably 0.01 g/10 minutes or more, more preferably 0.05 g/10 minutes or more, still more preferably 0.10 g/10 minutes or more, and most preferably 0.15 g/10 minutes or more from the viewpoint of further lowering the calender roll set temperature of the apparatus for film formation by calender rolling.

In a preferred embodiment, the characteristic property (1) melt mass flow rate of the (A) polyethylene may be 0.01 g/10 minutes or more and 3.0 g/10 minutes or less, 0.01 g/10 minutes or more and 2.0 g/10 minutes or less, 0.01 g/10 minutes or more and 1.2 g/10 minutes or less, 0.01 g/10 minutes or more and 0.90 g/10 minutes or less, 0.01 g/10 minutes or more and 0.60 g/10 minutes or less, 0.05 g/10 minutes or more and 3.0 g/10 minutes or less, 0.05 g/10 minutes or more and 2.0 g/10 minutes or less, 0.05 g/10 minutes or more and 1.2 g/10 minutes or less, 0.05 g/10 minutes or more and 0.90 g/10 minutes or less, 0.05 g/10 minutes or more and 0.60 g/10 minutes or less, 0.10 g/10 minutes or more and 3.0 g/10 minutes or less, 0.10 g/10 minutes or more and 2.0 g/10 minutes or less, 0.10 g/10 minutes or more and 1.2 g/10 minutes or less, 0.10 g/10 minutes or more and 0.90 g/10 minutes or less, 0.10 g/10 minutes or more and 0.60 g/10 minutes or less, 0.15 g/10 minutes or more and 3.0 g/10 minutes or less, 0.15 g/10 minutes or more and 2.0 g/10 minutes or less, 0.15 g/10 minutes or more and 1.2 g/10 minutes or less, 0.15 g/10 minutes or more and 0.90 g/10 minutes or less, or 0.15 g/10 minutes or more and 0.60 g/10 minutes or less.

The density as measured by a water displacement method in accordance with JIS K7112: 1999 (2) of the (A) polyethylene is usually 930 kg/m³ or more from the viewpoint of preventing the surface unevenness of a substrate from being propagated to the surface of a decorative sheet on the visible side when the decorative sheet containing a film product of the polyethylene resin composition is bonded to the surface of the substrate. The characteristic property (2) density of the (A) polyethylene may be preferably 940 kg/m³ or more, more preferably 945 kg/m³ or more, and still more preferably 950 kg/m³ or more. On the other hand, the characteristic property (2) density of the (A) polyethylene may be preferably 965 kg/m³ or less, and more preferably 960 kg/m³ or less from the viewpoint of further lowering the calender roll temperature setting of the apparatus for film formation by calender rolling.

In a preferred embodiment, the characteristic property (2) density of the (A) polyethylene may be 930 kg/m³ or more and 965 kg/m³ or less, 930 kg/m³ or more and 960 kg/m³ or less, 940 kg/m³ or more and 965 kg/m³ or less, 940 kg/m³ or more and 960 kg/m³ or less, 945 kg/m³ or more and 965 kg/m³ or less, 945 kg/m³ or more and 960 kg/m³ or less, 950 kg/m³ or more and 965 kg/m³ or less, or 950 kg/m³ or more and 960 kg/m³ or less.

The (A) polyethylene may contain a biomass-derived polyethylene in one of preferred embodiments. As a result, the environmental load can be reduced. Here, the "biomass-derived polyethylene" means a polyethylene produced using a biomass-derived monomer as at least a part of a raw material monomer(s) such as ethylene. In addition, the "biomass" is not particularly limited as long as it is a biological resource such as a plant resource, and may be, for example, sugar cane. In one embodiment, the ratio of the biomass-derived monomer to the total amount of the (A) polyethylene may be 10 mass% or more and 100 mass% or less, 15 mass% or more and 100 mass% or less, 20 mass% or more and 100 mass% or less, 25 mass% or more and 100 mass% or less, 30 mass% or more and 100 mass% or less, 35 mass% or more and 100 mass% or less, 40 mass% or more and 100 mass% or less, 45 mass% or more and 100 mass% or less, 50 mass% or more and 100 mass% or less, 55 mass% or more and 100 mass% or less, 60 mass% or more and 100 mass% or less, 65 mass% or more and 100 mass% or less, 70 mass% or more and 100 mass% or less, 75 mass% or more and 100 mass% or less, 80 mass% or more and 100 mass% or less, 85 mass% or more and 100 mass% or less, 90 mass% or more and 100 mass% or less, or 95 mass% or more and 100 mass% or less.

In an embodiment in which the (A) polyethylene contains polyethylene other than the biomass-derived polyethylene, the polyethylene other than the biomass-derived polyethylene may be usually a petroleum-derived polyethylene.

On the other hand, it has been found that when the (A) polyethylene contains a biomass-derived polyethylene, there is a disadvantage that the variation in thickness of a film formed using an apparatus for film formation by calender rolling is large. Although not intending to be bound by theory, in the polyethylene resin composition of the present invention, the reason why the variation in thickness is small even when the (A) polyethylene contains a biomass-derived polyethylene is considered as follows. According to JP-A-2023-081823, the biomass-derived polyethylene has more impurities as compared to the petroleum-derived polyethylene, and fish eyes are likely to occur in the film. Therefore, when the (A) polyethylene contains a biomass-derived polyethylene, the variation in thickness of a film formed using an apparatus for film formation by calender rolling tends to be large. On the other hand, in the polyethylene resin composition of the present invention, the occurrence of fish eyes can be suppressed by a synergistic action with the (B) antioxidant, the (C) fatty acid zinc salt, etc., and further, since a large amount of the inorganic filler of component (D) is blended, the generated fish eyes can be physically crushed. As a result, in the polyethylene resin composition of the present invention, the variation in thickness of a film product can be made smaller even when the (A) polyethylene contains a biomass-derived polyethylene.

The ratio of the biomass-derived monomer to the total monomers constituting the biomass-derived polyethylene can be determined by measuring the concentration of radioactive carbon (C₁₄). Determination of the concentration of radioactive carbon (C₁₄) and conversion to the ratio of the biomass-derived monomer can be performed by entrusting to an analysis institution such as Institute of Accelerator Analysis Ltd.

In another preferred embodiment, the (A) polyethylene may be a mixture composed of 90 to 20 mass% of (a1) a polyethylene having a relatively high melt mass flow rate and 10 to 80 mass% of (a2) a polyethylene having a relatively low melt mass flow rate from the viewpoint of suppressing the occurrence of vertical streaks of a film product of the polyethylene resin composition, in which a ratio (MFR-a1/MFR-a2) of the melt mass flow rate (MFR-a1) of the (a1) polyethylene to the melt mass flow rate (MFR-a2) of the (a2) polyethylene may be more than 1.0 and 20 or less. Here, the melt mass flow rate is measured in accordance with JIS K7210: 1999 under conditions of a temperature of 190°C and a load of 21.18 N. In the present embodiment, the sum of the amounts of the (a1) polyethylene and the (a2) polyethylene is usually 100 mass% (that is, in the present embodiment, the (A) polyethylene usually consists of the (a1) polyethylene and the (a2) polyethylene).

In this embodiment, not to mention, it is required that the characteristic property (1) melt mass flow rate and the characteristic property (2) density are satisfied at least by a mixture of the (a1) polyethylene and the (a2) polyethylene. Also, in this embodiment, the (a1) polyethylene may be a biomass-derived polyethylene, the (a2) polyethylene may be a biomass-derived polyethylene, or both the (a1) polyethylene and the (a2) polyethylene may be a biomass-derived polyethylene.

The ratio of the (a1) polyethylene and the (a2) polyethylene in a mixture of them may be preferably 70 to 40 mass% of the (a1) polyethylene and 30 to 60 mass% of the (a2) polyethylene.

The ratio (MFR-a1/MFR-a2) may be more preferably 1.5 to 12, and still more preferably 2.0 to 8.0.

As the (A) polyethylene, one kind or a mixture of two or more kinds of polyethylene can be used. When the (A) polyethylene is one kind or a mixture of two or more kinds of polyethylene, the mixture as a whole may satisfy the characteristic property (1) melt mass flow rate and the characteristic property (2) density, and optionally one or more of the above preferable characteristics or amounts.

### (B) Antioxidant

The polyethylene resin composition of the present invention contains (B) an antioxidant. Although not intending to be bound by theory, it is considered that the (B) antioxidant can function to suppress the occurrence of vertical streaks of a film product by a synergistic effect with the (C) fatty acid zinc salt, etc. In addition, as described above, it is considered that the (B) antioxidant can function to suppress the occurrence of fish eyes of a film product of the resin composition by a synergistic effect with the (C) fatty acid zinc salt, etc. even when the (A) polyethylene contains a biomass-derived polyethylene.

Examples of the (B) antioxidant include hindered phenol antioxidants, phosphite antioxidants, thioether antioxidants, and amine antioxidants.

The hindered phenol antioxidant is not particularly limited, and examples thereof include triethylene glycol-bis 3-(3-t-butyl-5-methyl-4-hydroxyphenyl)propionate, 1,6-hexanediol-bis 3-(3,5-di-t-butyl-4-hydroxyphenyl)propionate, 2,4-bis-(n-octylthio)-6-4-hydroxy-3,5-di-t-butylanilino)-1,3,5-triazine, pentaerythrityl-tetrakis 3-(3,5-di-t-butyl-4-hydroxyphenyl)propionate, 2,2-thio-diethylene bis 3-(3,5-di-t-butyl-4-hydroxyphenyl)propionate, octadecyl-3-(3,5-di-t-butyl-4-hydroxyphenyl)propionate, 2,2-thiobis(4-methyl-6-t-butylphenol), N,N'-hexamethylene bis(3,5-di-t-butyl-4-hydroxyhydrocinnamide), 3,5-di-t-butyl-4-hydroxy-benzyl phosphate-diethyl ester, and 1,3,5-trimethyl-2,4,6-tris(3,5-di-t-butyl-4-hydroxybenzyl)benzene.

The phosphite antioxidant is not particularly limited, and examples thereof include (i) compounds having one phosphite structure in one molecule, such as trialkyl phosphites such as trioleyl phosphite, trilauryl phosphite, triisodecyl phosphite, and tris(2-ethylhexyl)phosphite; alkylaryl phosphites such as 2-ethylhexyldiphenyl phosphite, isodecyldiphenyl phosphite, diphenyldecyl phosphite, 2,2'-methylenebis(4,6-di-tert-butylphenyl) 2-ethylhexyl phosphite; and triaryl phosphites such as tris-(2,4-di-tert-butylphenyl)phosphite, tris nonylphenyl phosphite, tricresyl phosphite, and triphenyl phosphite; and (ii) compounds having two or more phosphite structures in one molecule, such as tetraphenyldipropylene glycol diphosphite, 4,4'-butylidenebis(3-methyl-6-tert-butylphenylditridecyl phosphite), bis(decyl)pentaerythritol diphosphite, bis(tridecyl)pentaerythritol diphosphite, distearylpentaerythritol diphosphite, tetra-dodecyl(propane-2,2-diylbis(4,1-phenylene))bis(phosphite), 3,9-bis(octadecyloxy)-2,4,8,10-tetraoxa-3,9-diphosphaspiro[5.5]undecane, and 3,9-bis(2,6-di-tert-butyl-4-methylphenoxy)-2,4,8,10-tetraoxa-3,9-diphosphaspiro[5.5]undecane.

The thioether antioxidant is not particularly limited, and examples thereof include pentaerythritol tetrakis(3-dodecylthiopropionate), didodecylthiodipropionate, ditridecylthiodipropionate, ditetradecylthiodipropionate, dioctadecylthiodipropionate, and 2-mercaptobenzimidazole.

The amine antioxidant is not particularly limited, and examples thereof include polymers of 4,4'-dioctyldiphenylamine, N,N'-diphenyl-p-phenylenediamine, and 2,2,4-trimethyl-1,2-dihydroquinoline.

As the (B) antioxidant, the hindered phenol antioxidant and the phosphite antioxidant can be preferably used in combination.

As the (B) antioxidant, one kind or a mixture of two or more kinds of them can be used.

The amount of the (B) antioxidant may be usually 0.01 parts by mass or more, preferably 0.05 parts by mass or more, more preferably 0.10 parts by mass or more, still more preferably 0.20 parts by mass or more, and most preferably 0.30 parts by mass or more with respect to 100 parts by mass of the (A) polyethylene from the viewpoint of reliably obtaining the use effect thereof. On the other hand, the amount of the (B) antioxidant may be usually 5 parts by mass or less, preferably 4 parts by mass or less, more preferably 3 parts by mass or less, still more preferably 2 parts by mass or less, still further preferably 1.5 parts by mass or less, and most preferably 1.0 part by mass or less with respect to 100 parts by mass of the (A) polyethylene from the viewpoint of suppressing bleed out.

The amount of the (B) antioxidant may be usually 0.01 parts by mass or more and 5 parts by mass or less, and preferably 0.01 parts by mass or more and 4 parts by mass or less, 0.01 parts by mass or more and 3 parts by mass or less, 0.01 parts by mass or more and 2 parts by mass or less, 0.01 parts by mass or more and 1.5 parts by mass or less, 0.01 parts by mass or more and 1.0 part by mass or less, 0.05 parts by mass or more and 5 parts by mass or less, 0.05 parts by mass or more and 4 parts by mass or less, 0.05 parts by mass or more and 3 parts by mass or less, 0.05 parts by mass or more and 2 parts by mass or less, 0.05 parts by mass or more and 1.5 parts by mass or less, 0.05 parts by mass or more and 1.0 part by mass or less, 0.10 parts by mass or more and 5 parts by mass or less, 0.10 parts by mass or more and 4 parts by mass or less, 0.10 parts by mass or more and 3 parts by mass or less, 0.10 parts by mass or more and 2 parts by mass or less, 0.10 parts by mass or more and 1.5 parts by mass or less, 0.10 parts by mass or more and 1.0 part by mass or less, 0.20 parts by mass or more and 5 parts by mass or less, 0.20 parts by mass or more and 4 parts by mass or less, 0.20 parts by mass or more and 3 parts by mass or less, 0.20 parts by mass or more and 2 parts by mass or less, 0.20 parts by mass or more and 1.5 parts by mass or less, 0.20 parts by mass or more and 1.0 part by mass or less, 0.30 parts by mass or more and 5 parts by mass or less, 0.30 parts by mass or more and 4 parts by mass or less, 0.30 parts by mass or more and 3 parts by mass or less, 0.30 parts by mass or more and 2 parts by mass or less, 0.30 parts by mass or more and 1.5 parts by mass or less, or 0.30 parts by mass or more and 1.0 part by mass or less with respect to 100 parts by mass of the (A) polyethylene.

### (C) Fatty acid zinc salt, etc.

The polyethylene resin composition of the present invention contains one or more selected from the group consisting of a fatty acid zinc salt and a fatty acid magnesium salt (C). That is, the component (C) may be one or more kinds of fatty acid zinc salt, one or more kinds of fatty acid magnesium salt, or a mixture of one or more kinds of fatty acid zinc salt and one or more kinds of fatty acid magnesium salt.

The fatty acid zinc salt is a salt of a fatty acid (i.e., a monovalent carboxylic acid having a carboxy group (-COOH) in a hydrocarbon chain) and zinc. The fatty acid magnesium salt is a salt of a fatty acid (i.e., a monovalent carboxylic acid having a carboxy group (-COOH) in a hydrocarbon chain) and magnesium.

Although not intending to be bound by theory, it is considered that the (C) fatty acid zinc salt, etc. can function to suppress the occurrence of vertical streaks of a film product of the polyethylene resin composition by a synergistic effect with the (B) antioxidant. In addition, as described above, it is considered that the (C) fatty acid zinc salt, etc. can function to suppress the occurrence of fish eyes of a film product of the polyethylene resin composition by a synergistic effect with the (B) antioxidant even when the (A) polyethylene contains a biomass-derived polyethylene.

The fatty acids constituting the (C) fatty acid zinc salt, etc. are not particularly limited, and examples thereof include saturated higher fatty acids such as capric acid, lauric acid, myristic acid, palmitic acid, stearic acid, arachidic acid, behenic acid, lignoceric acid, cerotic acid, montanic acid, and melissic acid; unsaturated higher fatty acids such as oleic acid, linoleic acid, ricinoleic acid, behenic acid, and erucic acid; and hydroxy higher fatty acids such as 12-hydroxystearic acid. Here, the higher fatty acid means a fatty acid having 6 or more carbon atoms, preferably 10 or more carbon atoms.

The (C) fatty acid zinc salt, etc. may preferably contain one or more selected from the group consisting of zinc salts of saturated higher fatty acids and magnesium salts of saturated higher fatty acids, and more preferably contain one or more selected from the group consisting of zinc salts of saturated higher fatty acids having 12 to 22 carbon atoms and magnesium salts of saturated higher fatty acids having 12 to 22 carbon atoms, from the viewpoint of suppressing bleed out from a film product of the polyethylene resin composition. In a still more preferred embodiment, the (C) fatty acid zinc salt, etc. may contain a zinc salt of a saturated higher fatty acid having 16 to 20 carbon atoms from the viewpoint of suppressing the vertical streaks of a film product of the polyethylene resin composition. In another still more preferred embodiment, the (C) fatty acid zinc salt, etc. may contain a magnesium salt of a saturated higher fatty acid having 16 to 20 carbon atoms from the viewpoint of peelability from a calender rolling roll. In another still more preferred embodiment, the (C) fatty acid zinc salt, etc. may contain a zinc salt of a saturated higher fatty acid having 16 to 20 carbon atoms and a magnesium salt of a saturated higher fatty acid having 16 to 20 carbon atoms.

As the (C) fatty acid zinc salt, etc., one kind or a mixture of two or more kinds of the above exemplified substance groups can be used.

The amount of the (C) fatty acid zinc salt, etc. is usually 0.1 parts by mass or more, preferably 0.2 parts by mass or more, more preferably 0.3 parts by mass or more, still more preferably 0.4 parts by mass or more, and most preferably 0.5 parts by mass or more with respect to 100 parts by mass of the (A) polyethylene from the viewpoint of reliably obtaining the use effect thereof. On the other hand, the amount of the (C) fatty acid zinc salt, etc. may be usually 5 parts by mass or less, preferably 4 parts by mass or less, more preferably 3 parts by mass or less, still more preferably 2 parts by mass or less, still further preferably 1.5 parts by mass or less, and most preferably 1.0 part by mass or less with respect to 100 parts by mass of the (A) polyethylene from the viewpoint of suppressing bleed out.

The amount of the (C) fatty acid zinc salt, etc. may be usually 0.1 parts by mass or more and 5 parts by mass or less, and preferably 0.1 parts by mass or more and 4 parts by mass or less, 0.1 parts by mass or more and 3 parts by mass or less, 0.1 parts by mass or more and 2 parts by mass or less, 0.1 parts by mass or more and 1.5 parts by mass or less, 0.1 parts by mass or more and 1.0 part by mass or less, 0.2 parts by mass or more and 5 parts by mass or less, 0.2 parts by mass or more and 4 parts by mass or less, 0.2 parts by mass or more and 3 parts by mass or less, 0.2 parts by mass or more and 2 parts by mass or less, 0.2 parts by mass or more and 1.5 parts by mass or less, 0.2 parts by mass or more and 1.0 part by mass or less, 0.3 parts by mass or more and 5 parts by mass or less, 0.3 parts by mass or more and 4 parts by mass or less, 0.3 parts by mass or more and 3 parts by mass or less, 0.3 parts by mass or more and 2 parts by mass or less, 0.3 parts by mass or more and 1.5 parts by mass or less, 0.3 parts by mass or more and 1.0 part by mass or less, 0.4 parts by mass or more and 5 parts by mass or less, 0.4 parts by mass or more and 4 parts by mass or less, 0.4 parts by mass or more and 3 parts by mass or less, 0.4 parts by mass or more and 2 parts by mass or less, 0.4 parts by mass or more and 1.5 parts by mass or less, 0.4 parts by mass or more and 1.0 part by mass or less, 0.5 parts by mass or more and 5 parts by mass or less, 0.5 parts by mass or more and 4 parts by mass or less, 0.5 parts by mass or more and 3 parts by mass or less, 0.5 parts by mass or more and 2 parts by mass or less, 0.5 parts by mass or more and 1.5 parts by mass or less, or 0.5 parts by mass or more and 1.0 part by mass or less with respect to 100 parts by mass of the (A) polyethylene.

### (D) Inorganic filler

The polyethylene resin composition of the present invention contains (D) an inorganic filler. Although not intending to be bound by theory, as described above, it is considered that the (D) inorganic filler can function to reduce the variation in thickness of a film formed using an apparatus for film formation by calender rolling even when the (A) polyethylene contains a biomass-derived polyethylene.

The (D) inorganic filler is not particularly limited, and examples thereof include metal carbonates such as calcium carbonate and magnesium carbonate; silicon compounds such as silica (silicon dioxide), natural silicic acid, synthetic silicic acid (white carbon), and magnesium silicate; metal oxides such as alumina, zirconia, titanium dioxide (titania, for example, rutile titanium dioxide), zinc oxide, magnesium oxide, germanium oxide, indium oxide, tin oxide, indium tin oxide, antimony oxide, and cerium oxide; metal hydroxides such as magnesium hydroxide and aluminum hydroxide; nitrides such as aluminum nitride and boron nitride; talc, mica, clay, hydrotalcite, zeolite, barium sulfate, and carbon black. Other examples of the (D) inorganic filler include inorganic composite oxide colorants such as CI Pigment Blue 28, CI Pigment Blue 36, CI Pigment Brown 24, CI Pigment Yellow 53, CI Pigment Green 17, CI Pigment Black 28, CI Pigment Black 26, CI Pigment Green 50, and CI Pigment Green 26; and inorganic colorants such as red iron oxide (ferric oxide), copper-chromium alloys, iron-chromium-tin-titanium alloys, nickel-antimony-titanium alloys, and chromium-antimony-titanium alloys.

In one of preferred embodiments, the (D) inorganic filler may contain calcium carbonate from the viewpoint of further reducing the variation in thickness of a film formed using an apparatus for film formation by calender rolling even when the (A) polyethylene contains a biomass-derived polyethylene.

The specific surface area of calcium carbonate as the (D) inorganic filler as measured by an air permeation method may be preferably 1.4 m²/g or more, more preferably 1.7 m²/g or more, still more preferably 1.9 m²/g or more, and most preferably 2.0 m²/g or more from the viewpoint of reducing the variation in thickness of a film formed using an apparatus for film formation by calender rolling even when the (A) polyethylene contains a biomass-derived polyethylene. On the other hand, the specific surface area of calcium carbonate measured by an air permeation method may be preferably 3.5 m²/g or less, more preferably 3.0 m²/g or less, and still more preferably 2.5 m²/g or less from the viewpoint of the peelability between a film product of the polyethylene resin composition and the calender rolling roll.

The specific surface area of calcium carbonate measured by an air permeation method may be preferably 1.4 m²/g or more and 3.5 m²/g or less, 1.4 m²/g or more and 3.0 m²/g or less, 1.4 m²/g or more and 2.5 m²/g or less, 1.7 m²/g or more and 3.5 m²/g or less, 1.7 m²/g or more and 3.0 m²/g or less, 1.7 m²/g or more and 2.5 m²/g or less, 1.9 m²/g or more and 3.5 m²/g or less, 1.9 m²/g or more and 3.0 m²/g or less, 1.9 m²/g or more and 2.5 m²/g or less, 2.0 m²/g or more and 3.5 m²/g or less, 2.0 m²/g or more and 3.0 m²/g or less, or 2.0 m²/g or more and 2.5 m²/g or less.

The measurement of the specific surface area by the air permeation method is performed in accordance with 8.1 Specific surface area test of JIS R5201: 2015. In this test, an actual measurement value is used as the density. Specifically, as referred in Note a) of Table 1 in 8.1 Specific surface area test of JIS R5201: 2015, an actual measurement value of the density can be obtained in accordance with 7 Density test of the same JIS. It is noted that an operator should try to make the closest packing and the minimum porosity when creating a bed. As the porosity, a value calculated for the created bed is used.

In one of preferred embodiments, the polyethylene resin composition of the present invention may contain titanium dioxide (titania) as the (D) inorganic filler. By using titanium dioxide (titania) in the polyethylene resin composition, concealing properties suitable as a film substrate of a decorative sheet can be easily imparted to a film product of the polyethylene resin composition.

In one of more preferred embodiments, the polyethylene resin composition of the present invention may contain titanium dioxide (titania) and calcium carbonate.

As the (D) inorganic filler, one kind or a mixture of two or more kinds of the above exemplified substance groups can be used.

The amount of the (D) inorganic filler is usually 150 parts by mass or less, preferably 120 parts by mass or less, and more preferably 100 parts by mass or less with respect to 100 parts by mass of the (A) polyethylene from the viewpoint of suppressing the occurrence of vertical streaks of a film product of the polyethylene resin composition. On the other hand, the amount of the (D) inorganic filler may be usually 10 parts by mass or more, preferably 15 parts by mass or more, still more preferably 25 parts by mass or more, still further preferably 40 parts by mass or more, and most preferably 60 parts by mass or more with respect to 100 parts by mass of the (A) polyethylene from the viewpoint of reducing the variation in thickness of a film formed using an apparatus for film formation by calender rolling even when the (A) polyethylene contains a biomass-derived polyethylene.

The amount of the (D) inorganic filler may be usually 10 parts by mass or more and 150 parts by mass or less, and preferably 10 parts by mass or more and 120 parts by mass or less, 10 parts by mass or more and 100 parts by mass or less, 15 parts by mass or more and 150 parts by mass or less, 15 parts by mass or more and 120 parts by mass or less, 15 parts by mass or more and 100 parts by mass or less, 25 parts by mass or more and 150 parts by mass or less, 25 parts by mass or more and 120 parts by mass or less, 25 parts by mass or more and 100 parts by mass or less, 40 parts by mass or more and 150 parts by mass or less, 40 parts by mass or more and 120 parts by mass or less, 40 parts by mass or more and 100 parts by mass or less, 60 parts by mass or more and 150 parts by mass or less, 60 parts by mass or more and 120 parts by mass or less, or 60 parts by mass or more and 100 parts by mass or less with respect to 100 parts by mass of the (A) polyethylene.

In an embodiment in which the (D) inorganic filler contains calcium carbonate, the amount of calcium carbonate may be preferably 10 parts by mass or more, more preferably 15 parts by mass or more, still more preferably 25 parts by mass or more, still further preferably 30 parts by mass or more, and most preferably 35 parts by mass or more with respect to 100 parts by mass of the (A) polyethylene from the viewpoint of reliably obtaining the above-described effect. In this embodiment, not to mention, it is required that at least the sum of the amount of calcium carbonate and the amount of the (D) inorganic filler other than calcium carbonate at least falls within any of the ranges described above with respect to the amount of the (D) inorganic filler.

### (E) Acrylic processing aid

In one of preferred embodiments, the polyethylene resin composition of the present invention may contain (E) an acrylic processing aid from the viewpoint of suppressing the vertical streaks of a film product of the polyethylene resin composition.

The (E) acrylic processing aid is an acrylic polymer compound (i.e., an acrylic thermoplastic resin) mainly containing a structural unit derived from a (meth)acrylic acid alkyl ester such as methyl (meth)acrylate, ethyl (meth)acrylate, and n-butyl (meth)acrylate. Here, methyl (meth)acrylate means methyl acrylate or methyl methacrylate. The same applies to other compounds. The phrase "mainly containing a structural unit derived from a (meth)acrylic acid alkyl ester" means that the acrylic polymer compound contains a structural unit derived from a (meth)acrylic acid alkyl ester in an amount of 60 mol% or more of all the structural units of the acrylic polymer compound. In one embodiment, the content of the structural unit derived from a (meth)acrylic acid alkyl ester may be 70 mol% or more, 80 mol% or more, 90 mol% or more, or 95 to 100 mol% of all the structural units of the acrylic polymer compound.

As the (E) acrylic processing aid, one kind or a mixture of two or more kinds of the above exemplified substance groups can be used.

The amount of the (E) acrylic processing aid is not particularly limited because it is an optional component. The amount of the (E) acrylic processing aid may be preferably 0.01 parts by mass or more, more preferably 0.1 parts by mass or more, and still more preferably 0.5 parts by mass or more with respect to 100 parts by mass of the (A) polyethylene from the viewpoint of reliably obtaining the use effect thereof. On the other hand, the amount of the (E) acrylic processing aid may be preferably 10 parts by mass or less, more preferably 7 parts by mass or less, still more preferably 4 parts by mass or less, and most preferably 2 parts by mass or less with respect to 100 parts by mass of the (A) polyethylene from the viewpoint of smoothness of the surface of a film formed from the polyethylene resin composition.

The amount of the (E) acrylic processing aid may be preferably 0.01 parts by mass or more and 10 parts by mass or less, more preferably 0.01 parts by mass or more and 7 parts by mass or less, 0.01 parts by mass or more and 4 parts by mass or less, 0.01 parts by mass or more and 2 parts by mass or less, 0.1 parts by mass or more and 10 parts by mass or less, 0.1 parts by mass or more and 7 parts by mass or less, 0.1 parts by mass or more and 4 parts by mass or less, 0.1 parts by mass or more and 2 parts by mass or less, 0.5 parts by mass or more and 10 parts by mass or less, 0.5 parts by mass or more and 7 parts by mass or less, 0.5 parts by mass or more and 4 parts by mass or less, or 0.5 parts by mass or more and 2 parts by mass or less with respect to 100 parts by mass of the (A) polyethylene.

The polyethylene resin composition of the present invention may further contain an optional component(s) other than (A) to (E) as desired as long as it is not contrary to the object of the present invention. Examples of the other optional components include a thermoplastic resin other than the (A) polyethylene and the (E) acrylic processing aid, an additive other than the (B) antioxidant and the (C) fatty acid zinc salt, etc., an organic flame retardant, and an organic pigment.

Examples of the thermoplastic resin other than the (A) polyethylene and the (E) acrylic processing aid include an ethylene-α-olefin copolymer elastomer, an ethylene-α-olefin copolymer plastomer, a linear low density polyethylene, a low density polyethylene produced under high pressure, an ethylene-vinyl acetate copolymer, and an ethylene-(meth)acrylic acid alkyl ester copolymer.

Examples of the additives other than the (B) antioxidant and the (C) fatty acid zinc salt, etc. include weathering agents such as anti-aging agents, light stabilizers, and ultraviolet absorbers; lubricants such as acid amides, fatty acids, fatty acid metal salts other than the (C) fatty acid zinc salt, etc. such as calcium stearate, wax, silicon oil, and modified silicon oil; nucleating agents such as aromatic phosphate metal salts and Gel Alls; and antistatic agents such as glycerin fatty acid esters.

As the optional components other than (A) to (E), any one or more kinds of the substance groups exemplified above can be used.

The amount of any component other than the components (A) to (E) is not particularly limited as long as it is not contrary to the object of the present invention because it is a component that can be optionally used. The amount of the optional components other than the components (A) to (E) (when used) may be usually more than 0 parts by mass or 0.01 parts by mass or more and 50 parts by mass or less, 40 parts by mass or less, 30 parts by mass or less, 20 parts by mass or less, 10 parts by mass or less, 5 parts by mass or less, 1 part by mass or less, or 50 parts by mass or less with respect to 100 parts by mass of the (A) polyethylene.

In one embodiment, the polyethylene resin composition of the present invention may not contain any one or more kinds of the optional components other than (A) to (E).

In the present specification, the fact that the polyethylene resin composition does not contain a component means that the component is not intentionally blended. In the art of resin compositions, when a component is intentionally blended, 0.01 parts by mass or more of the component is usually blended with respect to the total mass of the polyethylene resin composition. Therefore, the phrase that the polyethylene resin composition does not contain a component can be paraphrased as that the content of the component is usually 0 parts by mass or more and less than 0.01 parts by mass, preferably 0.001 parts by mass or less, and more preferably 0.0001 parts by mass or less with respect to 100 parts by mass of the (A) polyethylene.

In one of preferred embodiments, the polyethylene resin composition of the present invention may not contain fibers such as cellulose from the viewpoint of imparting mechanical properties suitable as a film substrate of decorative sheet to a film product of the polyethylene resin composition.

### 2. Method for producing resin composition

The polyethylene resin composition of the present invention can be obtained, with the use of an arbitrary melt-kneading machine, by feeding the components (A) to (D) and optional components to be used as desired into the melt-kneading machine simultaneously or in an arbitrary order, and melt-kneading them, usually at a resin temperature of 180°C to 240°C, preferably at a resin temperature of 190 to 230°C.

Examples of the melt-kneading machine include a batch kneading machine such as a pressure kneader or a mixer; an extrusion and kneading machine such as a uniaxial extruder, a co-rotating twin screw extruder, and a counter-rotating twin screw extruder; and a calender roll kneader. These may be used in any combination.

The obtained resin composition can be pelletized by an arbitrary method, and it can be then formed into a film using an arbitrary apparatus for film formation by calender rolling. The pelletization can be performed by a method such as hot cutting, strand cutting, and underwater cutting.

Also, in one of embodiments, the bulk, rod-shaped, or strand-shaped polyethylene resin composition discharged from the melt-kneading machine may be directly fed to an arbitrary apparatus for film formation by calender rolling, thereby forming a film.

### 3. Film

The film of the present invention is a film formed from the polyethylene resin composition of the present invention. The film of the present invention can be suitably used as a film substrate of a decorative sheet.

The film of the present invention can be obtained by forming a film using the polyethylene resin composition of the present invention, with the use of an apparatus for film formation by calender rolling equipped with a calender rolling machine and a take-up device. More preferably, the film formation can be performed under a condition of a roll temperature of 160°C to 200°C with the use of the apparatus for film formation by calender rolling.

Examples of the calender rolling machine include an upright three-roll type, an upright four-roll type, an L-shaped four-roll type, an inverted L-shaped four-roll type, and a Z-shaped roll type.

The thickness of the film of the present invention can be appropriately controlled in consideration of film formability, an intended use and required characteristics of the film, and handleability. The thickness of the film of the present invention may be usually 20 µm or more, preferably 30 µm or more, more preferably 40 µm or more, and still more preferably 45 µm or more from the viewpoint of film formability, handleability, and concealing properties. On the other hand, the thickness of the film of the present invention may be usually 500 µm or less, preferably 200 µm or less, more preferably 150 µm or less, and still more preferably 100 µm or less from the viewpoint of meeting a demand for reducing the thickness of an article including the film.

The thickness of the film of the present invention may be usually 20 µm or more and 500 µm or less, and preferably 20 µm or more and 200 µm or less, 20 µm or more and 150 µm or less, 20 µm or more and 100 µm or less, 30 µm or more and 500 µm or less, 30 µm or more and 200 µm or less, 30 µm or more and 150 µm or less, 30 µm or more and 100 µm or less, 40 µm or more and 500 µm or less, 40 µm or more and 200 µm or less, 40 µm or more and 150 µm or less, 40 µm or more and 100 µm or less, 45 µm or more and 500 µm or less, 45 µm or more and 200 µm or less, 45 µm or more and 150 µm or less, or 45 µm or more and 100 µm or less.

The film of the present invention may be transparent or opaque. Further, the film of the present invention may be colored or uncolored. Furthermore, the film of the present invention may be colored and transparent, or colored and opaque.

The transparent film of the present invention according to an embodiment can be suitably used, for example, as a film substrate of a decorative sheet pasted on glass such as a glass decoration film. The film of the present invention according to an embodiment, which is opaque or has concealing properties, can be suitably used, for example, as a film substrate of a decorative sheet for decoration of home electric appliances, furniture, and building members, and a film substrate of a wallpaper for decoration of wall of buildings.

### 4. Decorative sheet

The decorative sheet of the present invention includes the film of the present invention. The decorative sheet of the present invention is usually a decorative sheet using the film of the present invention as a film substrate. In a non-limiting and exemplary embodiment, the decorative sheet of the present invention is a decorative sheet using the film of the present invention according to an embodiment, which is opaque or has concealing properties, as a film substrate (hereinafter, such a decorative sheet may be abbreviated as a "decorative sheet (α)"). Hereinafter, this exemplary embodiment will be described.

Examples of the decorative sheet (α) include decorative sheets having the following structures:
in order from a side normally viewed in an actual use state,
(a1) a decorative sheet having a surface protective layer and a film substrate layer;
(α2) a decorative sheet having a surface protective layer, a printed layer, and a film substrate layer;
(α3) a decorative sheet having a surface protective layer, a transparent resin layer, a printed layer, and a film substrate layer;
(α4) a decorative sheet having a surface protective layer, a printed layer, a transparent resin layer, and a film substrate layer;
(α5) a decorative sheet having a surface protective layer, a printed layer, a transparent resin layer, a printed layer, and a film substrate layer;
(α6) a decorative sheet having a surface protective layer, a transparent resin layer, and a film substrate layer;
(α7) a decorative sheet having a transparent resin layer and a film substrate layer; and
(α8) a decorative sheet having a transparent resin layer, a printed layer, and a film substrate layer.

The decorative sheets (α1) to (α8) may further have a layer of adhesive or pressure-sensitive adhesive on the back surface of the film substrate layer. In the present specification, the "actual use state" refers to a state in which the decorative sheet is used for decoration of an article. The "front surface" means a surface on the side normally viewed in an actual use state of the layer. The "back surface" means a surface opposite to the side normally viewed in an actual use state of the layer (i.e., a surface opposite to the front surface). The configurations of the film of the film substrate layer and the polyethylene resin composition constituting the film were described above in "1. Resin composition", "2. Method for producing resin composition", and "3. Film". Hereinafter, each layer other than the film substrate layer will be described.

### Surface protective layer

The surface protective layer functions to impart scratch resistance. The surface protective layer preferably can function to impart scratch resistance and stain resistance.

The material used for forming the surface protective layer is not particularly limited as long as scratch resistance can be imparted, preferably as long as scratch resistance and stain resistance can be imparted, which can be appropriately chosen in consideration of an intended use of the decorative sheet. Examples of the material used for forming the surface protective layer include curable urethane resin composition coating materials such as two-pack type curable urethane coating materials; thermosetting resin composition coating materials such as curable silicone resin composition coating materials and curable fluororesin composition coating materials; active energy ray-curable resin composition coating materials such as polyfunctional (meth)acrylate (compound having two or more acryloyl groups or methacryloyl groups in one molecule) composition coating materials; and thermoplastic resin composition coating materials such as thermoplastic urethane resin composition coating materials, thermoplastic silicone resin composition coating materials, and thermoplastic fluororesin composition coating materials. As the material for forming the surface protective layer, one kind or a mixture of two or more kinds of them can be used.

The surface protective layer can be formed by a known web coating method using the above material.

The thickness of the surface protective layer is not particularly limited, which can be appropriately controlled in consideration of workability in forming the surface protective layer and an intended use of the decorative sheet (in view of the required level of scratch resistance and stain resistance, for example). The thickness of the surface protective layer may be usually 0.5 µm or more, preferably 1 µm or more, more preferably 2 µm or more, still more preferably 3 µm or more, and most preferably 5 µm or more from the viewpoint of scratch resistance. On the other hand, the thickness of the surface protective layer may be preferably 100 µm or less, more preferably 60 µm or less, and still more preferably 30 µm or less from the viewpoint of workability in forming the surface protective layer.

The thickness of the surface protective layer may be usually 0.5 µm or more and 100 µm or less, and preferably 0.5 µm or more and 60 µm or less, 0.5 µm or more and 30 µm or less, 1 µm or more and 100 µm or less, 1 µm or more and 60 µm or less, 1 µm or more and 30 µm or less, 2 µm or more and 100 µm or less, 2 µm or more and 60 µm or less, 2 µm or more and 30 µm or less, 3 µm or more and 100 µm or less, 3 µm or more and 60 µm or less, 3 µm or more and 30 µm or less, 5 µm or more and 100 µm or less, 5 µm or more and 60 µm or less, or 5 µm or more and 30 µm or less.

### Transparent resin layer

The transparent resin layer can function to impart a sense of depth to the design and/or protect the printed layer. In an exemplary embodiment, the transparent resin layer may be formed by laminating a film made of a transparent resin with other layer(s). In another embodiment, the transparent resin layer may be formed by laminating a transparent resin layer using a melt extrusion method onto other layer(s).

Examples of the transparent resin constituting the transparent resin layer include polyvinyl chloride resins; polyester resins such as polyethylene terephthalate and glycol-modified polyethylene terephthalate (PETG); fluorine-containing resins such as polyvinylidene fluoride; aromatic polycarbonate resins; acrylic resins such as polymethyl methacrylate, polyethyl methacrylate, and vinyl cyclohexane/methyl (meth)acrylate copolymer; polyolefin resins such as polyethylene, polypropylene, and poly 4-methyl-pentene-1; cellulose ester resins such as triacetyl cellulose; cyclic hydrocarbon resins such as ethylene-norbornene copolymer; polyamide resins, polyarylate resins, polymerized urethane acrylate resins, and polyimide resins. As the transparent resin, one kind or a mixture of two or more kinds of them can be used.

Examples of the film made of a transparent resin to be laminated as the transparent resin layer include an unstretched film, a uniaxially stretched film, and a biaxially stretched film of the transparent resin, and a laminated film obtained by laminating two or more layers of one or more kinds of these films.

The thickness of the transparent resin layer is not particularly limited, which can be appropriately controlled in consideration of desired design, workability in forming the transparent resin layer, and an intended use of the decorative sheet. The thickness of the transparent resin layer may be, for example, 1 to 200 µm, 5 to 120 µm, 10 to 100 µm, 20 to 80 µm, or 30 to 50 µm.

### Printed layer

The printed layer is a layer provided for enhancing designability. The printed layer can be formed by laminating one or more layers entirely or partially on the front surface of the film substrate layer, the front surface of the transparent resin layer, or/and the back surface of the transparent resin layer directly or via an anchor coat.

The pattern of the printed layer is not particularly limited, which may be any desired pattern. Examples of the pattern of the printed layer include a metal-like pattern such as hair lines, a grain pattern, a stone grain pattern imitating a surface of a rock such as marble, a fabric pattern imitating a texture or a cloth-like pattern, a pattern imitating a leather product, a tiling pattern, a brickwork pattern, a parquet pattern, a geometric figure pattern such as a lattice pattern, a pattern imitating a character or a symbol, and a patchwork.

The method for forming the printed layer is not particularly limited, which can be appropriately chosen in consideration of a pattern type of the printed layer to be formed and an intended use of the decorative sheet. Examples of the method for forming the printed layer include a gravure printing (intaglio printing) method, an inkjet printing method, and the like.

The printing ink used for forming the printed layer is not particularly limited, which can be appropriately chosen in consideration of a method for forming the printed layer and an intended use of the decorative sheet. Examples of the printing ink used for forming the printed layer include those obtained by appropriately mixing a binder and a colorant, and preferably those obtained by appropriately mixing a binder and a colorant with an optional component(s) such as a solvent, a stabilizer, a plasticizer, a catalyst, and a curing agent.

The binder is not particularly limited, which can be appropriately chosen in consideration of a method for forming the printed layer, a type of the colorant to be used, and an intended use of the decorative sheet. Examples of the binder include polyurethane resins, vinyl chloride-vinyl acetate copolymer resins, vinyl chloride-vinyl acetate-acrylic copolymer resins, chlorinated polypropylene resins, acrylic resins, polyester resins, polyamide resins, butyral resins, polystyrene resins, nitrocellulose resins, and cellulose acetate resins, and active energy ray-curable resins such as polyfunctional (meth)acrylates (compounds having two or more acryloyl groups or methacryloyl groups in one molecule). As the binder, one kind or a mixture of two or more kinds of them can be used.

The colorant is not particularly limited, which can be appropriately chosen in consideration of a method for forming the printed layer, a type of the binder to be used, and an intended use of the decorative sheet. Examples of the colorant include inorganic colorants such as titanium dioxide (titania), red iron oxide (ferric oxide), ultramarine, and carbon black; organic colorants such as aniline black, quinacridone red, isoindolinone yellow, and phthalocyanine blue; and high brightness pigments such as glass particles coated with a metal oxide and pulverized products of a vapor-deposited foil of a metal-containing compound. As the colorant, one kind or a mixture of two or more kinds of them can be used.

In another embodiment, the printed layer may be formed by laminating aluminum, tin, titanium, indium, oxides thereof, and the like by a known dry coating method such as vacuum vapor deposition. Thus, a metal-like design can be provided.

The thickness of the printed layer is not particularly limited, which can be appropriately controlled in consideration of a design type to be imparted, a method for forming the printed layer, a type of the printing ink to be used, and an intended use of the decorative sheet. The thickness of the printed layer (when formed by laminating two or more layers, the total thickness thereof) may be, for example, 0.1 to 20 µm, 0.5 to 10 µm, or 1 to 5 µm.

### Layer of adhesive or pressure-sensitive adhesive

The layer of adhesive or pressure-sensitive adhesive can function to make it possible to bond the decorative sheet to an adherend regardless of the surface material or surface state (i.e., surface smoothness or the like) of a film substrate layer of the decorative sheet to be bonded to the adherend (i.e., decorative sheet bonding surface). The term "adhesive or pressure-sensitive adhesive" of the layer includes a pressure-sensitive adhesive or an adhesive having no properties of pressure sensitive adhesion.

The adhesive or the pressure-sensitive adhesive used for forming the layer of adhesive or pressure-sensitive adhesive is not particularly limited, which can be appropriately chosen in consideration of the fact that a film substrate of the decorative sheet is made from a polyethylene resin composition, as well as in consideration of the surface material or surface state (i.e., surface smoothness or the like) of a film substrate layer of the decorative sheet to be bonded to an adherend (i.e., decorative sheet bonding surface) and an intended use of an article decorated by the decorative sheet (i.e., bonding strength and the like required for the intended use). Examples of the adhesive or the pressure-sensitive adhesive include pressure-sensitive adhesives such as acrylic pressure-sensitive adhesives, urethane pressure-sensitive adhesives, and silicone pressure-sensitive adhesives; hot-melt adhesives such as thermoplastic polyester adhesives; and curable adhesives such as curable urethane adhesives, curable polyester adhesives, and epoxy adhesives. As the adhesive or the pressure-sensitive adhesive, one kind or a mixture of two or more kinds of them can be used.

The layer of adhesive or pressure-sensitive adhesive can be formed by using a known web coating method using the adhesive or the pressure-sensitive adhesive as mentioned above.

The thickness of the layer of adhesive or pressure-sensitive adhesive can be appropriately chosen in consideration of the fact that a film substrate of the decorative sheet is made from a polyethylene resin composition, as well as in consideration of the surface material or surface state (i.e., surface smoothness or the like) of a film substrate layer of the decorative sheet to be bonded to an adherend (i.e., decorative sheet bonding surface) and an intended use of an article decorated by the decorative sheet (i.e., bonding strength and the like required for the intended use). The thickness of the layer of adhesive or pressure-sensitive adhesive may be usually 0.1 to 100 µm, preferably 1 to 50 µm, and more preferably 2 to 30 µm.

### Method for producing decorative sheet

The method for producing the decorative sheet of the present invention is not particularly limited, and a known method can be appropriately chosen and used in consideration of the layer configuration and the characteristics of each layer. In addition, the method for producing the decorative sheet (α) (i.e., the decorative sheet using the film of the present invention according to an embodiment, which is opaque or has concealing properties, as a film substrate) is not particularly limited, and a known method can be appropriately chosen and used in consideration of the layer configuration and the characteristics of each layer.

A non-limiting example of a method for producing an embodiment of the decorative sheet (α3) will be described.
(1) First, the film of the present invention according to an embodiment, which is opaque or has concealing properties, is produced in a manner described above in "1. Resin composition", "2. Method for producing resin composition", and "3. Film".
(2) Next, a printed layer is formed on one surface of the film of the present invention obtained in the step (1) by a gravure printing method, thereby obtaining a laminate A including a film substrate layer.
(3) Next, using any of the transparent resins described above, a transparent resin film is formed with the use of an apparatus for film formation by calender rolling equipped with a calender rolling machine and a take-up device, or a T-die film forming apparatus equipped with an extruder, a T-die and a take-up device.
(4) A surface protective layer is formed on one surface of the transparent resin film obtained in the step (3) using a two-pack type curable urethane coating material; and a transparent hot melt adhesive layer is formed on the other surface of the transparent resin film, thereby obtaining a laminate B.
(5) The surface of the laminate A obtained in the step (2) on the printed layer side and the surface of the laminate B obtained in the step (4) on the transparent hot melt adhesive layer side are superposed with each other; and the combined product is then inserted into a position between a rotating heating roll and a rotating receiving roll, and the laminate A and the laminate B are thermally laminated to obtain a laminate C.
(6) A layer of adhesive or pressure-sensitive adhesive is formed on the surface of the laminate C obtained in the step (5) on the film substrate layer side (i.e., the inventive film side), thereby obtaining a decorative sheet.

Before the step (4), the surface of the transparent resin film obtained in the step (3) on which the surface protective layer is to be formed may be subjected to an emboss processing. Before the step (5), the surface of the laminate A on the printed layer side may be subjected to an emboss processing. Before or simultaneously with the step (5), the surface of the laminate B on the surface protective layer side may be subjected to an emboss processing. After the step (5), the surface of the laminate C on the surface protective layer side may be subjected to an emboss processing.

The emboss processing can be performed by inserting a web into a position between a rotating design imparting roll and a rotating receiving roll heated appropriately under a pressure in such a manner that the surface of the web to be subjected to the emboss processing is arranged on the design imparting roll side.

The shape to be obtained by the emboss processing can be appropriately chosen in consideration of designability, characteristics of a material constituting the surface to be embossed, and a thickness of a layer constituting the surface to be embossed. Examples of the shape to be obtained by the emboss processing include a shape imitating a natural material such as a wood grain pattern or a leather texture, a hairline shape as if a metal is processed, a geometric shape such as a lattice pattern, a stripe pattern, and a polka dot pattern, and a shape obtained by combining a plurality of these shapes.

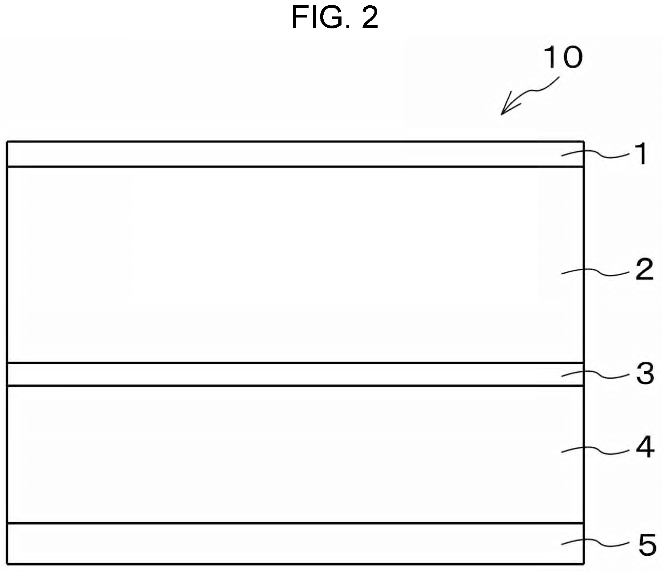

Fig. 2 is a conceptual diagram showing an embodiment of the decorative sheet (α3).

A decorative sheet 10 includes a surface protective layer 1, a transparent resin layer 2, a printed layer 3, a film substrate layer 4, and a layer of adhesive or pressure-sensitive adhesive 5 in this order from the side normally viewed in an actual use state.

In this example, the surface protective layer 1 is formed of a two-pack type curable urethane coating material, the transparent resin layer 2 is formed of an amorphous aromatic polyester (i.e., a glycol-modified polyethylene terephthalate (PETG)), and the layer of adhesive or pressure-sensitive adhesive 5 is formed using a hot melt adhesive.

### EXAMPLES

Hereinafter, the present invention will be described with reference to examples, but the present invention is not limited thereto.

### Method for measuring and evaluating physical properties

### (i) Surface appearance (the presence or absence of vertical streaks)

The both surfaces of a film were visually observed while being irradiated with light of a fluorescent lamp at various incident angles and the surface appearance was evaluated according to the following criteria.
A: No vertical streaks were observed. The gloss of the film surface was also uniform.
B: No vertical streaks were observed. However, there was a place where the gloss of the film surface was lower than the surroundings. In other words, very slight surface roughness was partially observed.
C: No vertical streaks were observed. However, slight surface roughness was observed.
D: A vertical streak(s) was(were) observed.

In this test, the evaluation of rank C or higher for surface appearance (the presence or absence of vertical streaks) is regarded as pass.

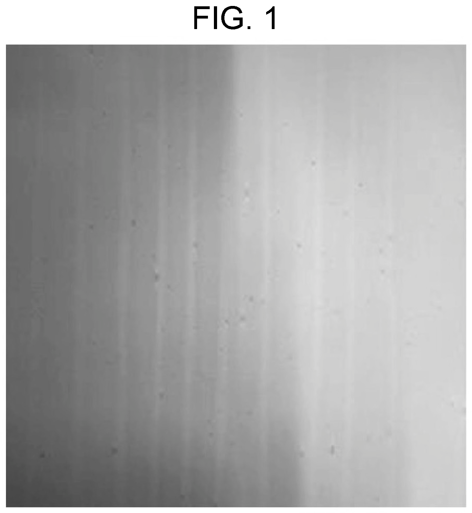

Fig. 1 shows a photograph of the surface appearance of a film 1 of Example 16 (an example not fulfilling the requirements of the present invention). It was clearly observed that vertical streaks occurred.

### (ii) Thickness unevenness

The thicknesses at three points of a film in the lateral direction, which are near the center portion in the lateral direction of the film, 10 cm inside from the left end portion in the lateral direction of the film, and 10 cm inside from the right end portion in the lateral direction of the film, were measured at ten points by 5 m in the machine direction of the film, that is, at thirty points in total, and a standard deviation was determined from the results of thickness measurement, and the thickness unevenness was evaluated according to the following criteria.
A: The standard deviation was less than 2.0.
B: The standard deviation was 2.0 or more and less than 3.0.
C: The standard deviation was 3.0 or more and less than 6.0.
D: The standard deviation was 6.0 or more.

In this test, the evaluation of rank C or higher for thickness unevenness is regarded as pass.

When both the surface appearance (the presence or absence of vertical streaks) and the thickness unevenness are rank C or higher under at least one of the film formation conditions of film 1 and the film formation conditions of film 2 described later, the polyethylene resin composition can be evaluated that it passed the test, which means that the polyethylene resin composition is suitable for film formation by calender rolling.

### Raw materials used

### (A) Polyethylene

(A-1) Biomass-derived polyethylene "GF4950" (trade name) from Braskem S.A. Melt mass flow rate (190°C, 21.18 N): 0.36 g/10 min, density: 956 kg/m³, content of biomass-derived monomers: 96 mass%.
(A-2) Petroleum-derived polyethylene "HIZEX3300F" (trade name) from Prime Polymer Co., Ltd. Melt mass flow rate (190°C, 21.18 N): 1.1 g/10 min, density: 949 kg/m³.
(A-3) Petroleum-derived polyethylene "HD6600B" (trade name) from PTT. Melt mass flow rate (190°C, 21.18 N): 0.40 g/10 min, density: 957 kg/m³.
(A-4) Petroleum-derived polyethylene "HD6000F" (trade name) from PTT. Melt mass flow rate (190°C, 21.18 N): 0.16 g/10 min, density: 956 kg/m³.
(A-5) Petroleum-derived polyethylene "P-9210" (trade name) from KEIYO POLYETHYLENE CO., LTD. Melt mass flow rate (190°C, 21.18 N): 0.11 g/10 min, density: 950 kg/m³.

### (B) Antioxidant

(B-1) Hindered phenol antioxidant "ADK STAB AO-60" (trade name) from ADEKA Corporation. Pentaerythritol tetrakis[3-(3,5-di-tert-butyl-4-hydroxyphenyl)propionate].
(B-2) Phosphite antioxidant "ADK STAB HP-10" (trade name) from ADEKA CORPORATION. 2,2'-Methylenebis(4,6-di-tert-butylphenyl) 2-ethylhexyl phosphite.

### (C) Fatty acid zinc salt, etc.

(C-1) Zinc stearate. CAS number 557-05-1.
(C-2) Magnesium stearate. CAS number 557-04-0.

### (D) Inorganic filler

(D-1) Rutile titanium dioxide (white pigment) "TITONE R-11.P" (trade name) from Sakai Chemical Industry Co., Ltd.
(D-2) Calcium carbonate "SOFTON 2200" (trade name) from Bihoku Funka Kogyo Co., Ltd. Specific surface area measured by air permeation method: 2.2 m²/g.
(D-3) Calcium carbonate "SOFTON 1500" (trade name) from Bihoku Funka Kogyo Co., Ltd. Specific surface area measured by air permeation method: 1.5 m²/g.
(D-4) Calcium carbonate "SOFTON 2600" (trade name) from Bihoku Funka Kogyo Co., Ltd. Specific surface area measured by air permeation method: 2.6 m²/g.

### (E) Acrylic processing aid

(E-1) Acrylic processing aid "METABLEN P-1050" (trade name) from Mitsubishi Chemical Corporation.

### Example 1

### (1) Film formation of film 1

A blend of 50 parts by mass of the component (A-1), 50 parts by mass of the component (A-2), 0.30 parts by mass of the component (B-1), 0.20 parts by mass of the component (B-2), 0.65 parts by mass of the component (C-1), and 20 parts by mass of the component (D-2) was melt-kneaded under a condition of a resin temperature at the time of discharge of 200°C using a mixer kneader to obtain a polyethylene resin composition. Thereafter, the polyethylene resin composition was directly fed to an apparatus for film formation by calender rolling equipped with an inverted L-shaped four-roll type calender rolling machine and a take-up device, and a film 1 having a thickness of 60 µm was formed under film formation conditions of a first roll at 175°C, a second roll at 175°C, a third roll at 180°C, and a fourth roll at 175°C.

### (2) Film formation of film 2

A film 2 having a thickness of 60 µm was formed in the same manner except that the film formation conditions were changed to a first roll at 185°C, a second roll at 185°C, a third roll at 190°C, and a fourth roll at 185°C.

### (3) Evaluation of films 1 and 2

The obtained film 1 and film 2 were subjected to the tests (i) and (ii). The results are shown in Table 1.

### Examples 2 to 24

A film 1 and a film 2 were obtained in the same manner as in Example 1 except that the formulation of the polyethylene resin composition was changed as shown in Table 1 or Table 2. The obtained film 1 and film 2 were subjected to the tests (i) and (ii). The evaluation results are shown in Table 1 or Table 2.

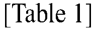

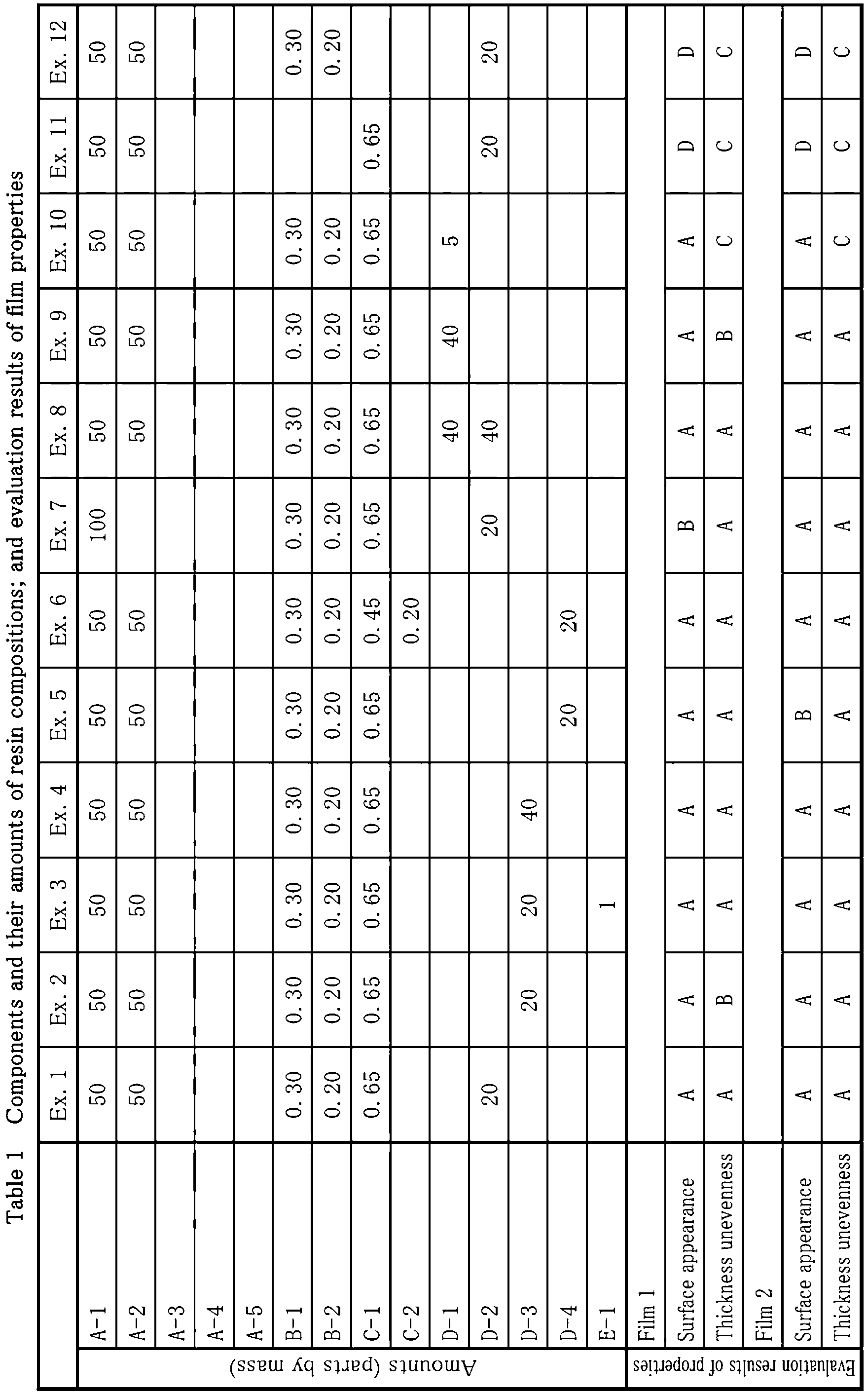

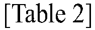

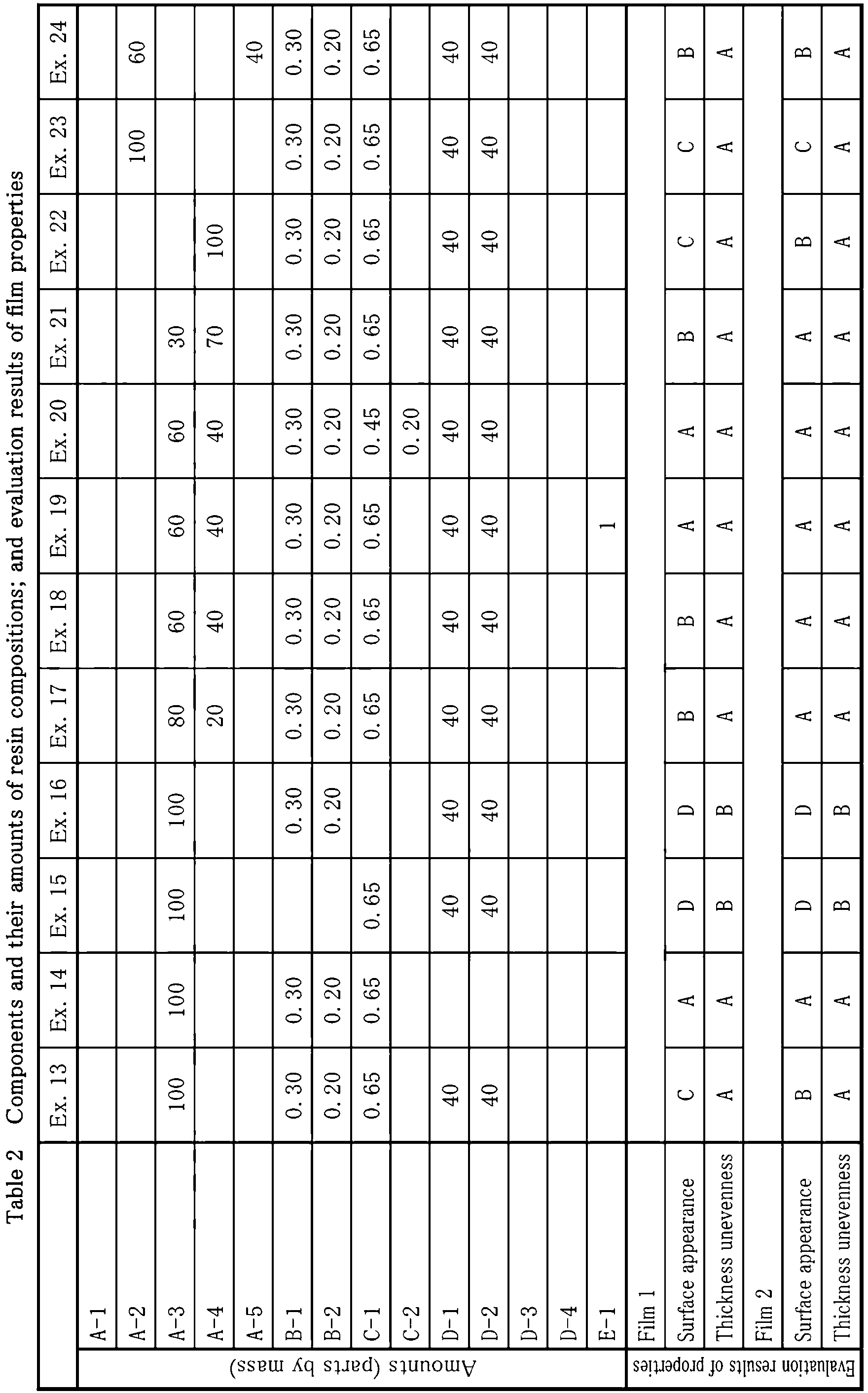

It has been found that when the film was formed from the polyethylene resin composition according to the present invention with the use of the apparatus for film formation by calender rolling, the occurrence of vertical streaks was suppressed. With respect to the polyethylene resin composition according to preferred embodiments of the present invention, it has been found that even when the biomass-derived polyethylene was used, the variation in the thickness of the film formed with the use of the apparatus for film formation by calender rolling was small. Therefore, it can be considered that a film formed from the polyethylene resin composition of the present invention with the use of an apparatus for film formation by calender rolling can be suitably used as a film substrate of a decorative sheet.

### REFERENCE SIGNS LIST

- 1: Surface protective layer
- 2: Transparent resin layer
- 3: Printed layer
- 4: Film substrate layer
- 5: Layer of adhesive or pressure-sensitive adhesive
- 10: Decorative sheet

## Claims

1. A polyethylene resin composition for film formation by calender rolling, comprising:
(A) 100 parts by mass of a polyethylene;
(B) 0.01 to 5 parts by mass of an antioxidant;
(C) 0.1 to 5 parts by mass of one or more selected from the group consisting of a fatty acid zinc salt and a fatty acid magnesium salt, and
(D) 10 to 150 parts by mass of an inorganic filler,
wherein the (A) polyethylene has:
(1) a melt mass flow rate of 3.0 g/10 minutes or less, as measured under conditions of a temperature of 190°C and a load of 21.18 N in accordance with JIS K7210: 1999; and
(2) a density of 930 kg/m³ or more, as measured by a water displacement method in accordance with JIS K7112: 1999.

2. The polyethylene resin composition for film formation by calender rolling according to claim 1, wherein the (C) one or more selected from the group consisting of a fatty acid zinc salt and a fatty acid magnesium salt contain a zinc salt of a saturated higher fatty acid having 16 to 20 carbon atoms and a magnesium salt of a saturated higher fatty acid having 16 to 20 carbon atoms.

3. The polyethylene resin composition for film formation by calender rolling according to claim 1, further comprising 0.01 to 10 parts by mass of (E) an acrylic processing aid.

4. The polyethylene resin composition for film formation by calender rolling according to claim 1, wherein the (A) polyethylene contains a biomass-derived polyethylene.

5. The polyethylene resin composition for film formation by calender rolling according to claim 1, wherein the (D) inorganic filler contains calcium carbonate, and an amount of the calcium carbonate is 10 parts by mass or more with respect to 100 parts by mass of the (A) polyethylene.

6. The polyethylene resin composition for film formation by calender rolling according to claim 5, wherein the calcium carbonate being the (D) inorganic filler has a specific surface area of 1.4 to 3.5 m²/g as measured by an air permeation method.

7. The polyethylene resin composition for film formation by calender rolling according to claim 6, wherein the (A) polyethylene contains a biomass-derived polyethylene.

8. The polyethylene resin composition for film formation by calender rolling according to claim 1, wherein
the (A) polyethylene is:
a mixture composed of 90 to 20 mass% of (a1) a polyethylene having a relatively high melt mass flow rate and 10 to 80 mass% of (a2) a polyethylene having a relatively low melt mass flow rate; and
a ratio (MFR-a1/MFR-a2) of the melt mass flow rate (MFR-a1) of the (a1) polyethylene to the melt mass flow rate (MFR-a2) of the (a2) polyethylene is more than 1.0 and 20 or less; and
the melt mass flow rates of the (a1) polyethylene and the (a2) polyethylene are measured in accordance with JIS K7210: 1999 under conditions of a temperature of 190°C and a load of 21.18 N.

9. The polyethylene resin composition for film formation by calender rolling according to claim 1, wherein the polyethylene resin composition does not contain cellulose.

10. A film formed by calender rolling, the film being made from the polyethylene resin composition for film formation by calender rolling according to any one of claims 1 to 9.

11. A decorative sheet comprising the film formed by calender rolling according to claim 10.
